# FASCICULE DE BREVET EUROPEEN

(11) **EP 3 631 626 B1**
(45) Date de publication et mention de la délivrance du brevet: **18.10.2023**
(21) Numéro de dépôt: 18723560.1
(22) Date de dépôt: 17.05.2018
(51) Int. Cl.: G06F 8/65, G06Q 50/06

(54) **MISE À JOUR HIÉRARCHISÉE DE LOGICIELS D'ÉQUIPEMENTS D'UN RÉSEAU DE DISTRIBUTION ÉLECTRIQUE**
HIERARCHISIERTE AKTUALISIERUNG VON SOFTWARE VON GERÄTEN EINES ELEKTRISCHEN VERTEILUNGSNETZES
HIERARCHIZED UPDATING OF SOFTWARE OF EQUIPMENT OF AN ELECTRICAL DISTRIBUTION NETWORK

(30) Priorité: 30.05.2017 FR 1754764
(43) Date de publication de la demande: 08.04.2020
(73) Titulaire: Electricité de France, 75008 Paris (FR)
(72) Inventeur: LUCIDARME, Thierry, 78460 Chevreuse (FR); GILLAUX, Maxime, 35000 Rennes (FR)
(74) Mandataire: Plasseraud IP
(86) Numéro de dépôt international: PCT/EP2018/062938
(87) Numéro de publication internationale: WO 2018/219674

(56) Documents cités:
- US-A1- 2013 104 117
- US-A1- 2014 028 468

## Description

La présente invention concerne le contrôle-commande d'équipements mis en oeuvre dans le contexte des réseaux électriques intelligents de type « smartgrids ».

L'invention concerne plus particulièrement un procédé relatif aux opérations de maintenance (« O&M ») de ces équipements et plus précisément aux mécanismes de gestion et de mise à jour de versions de logiciels, tel que notamment les logiciels métiers (ou « firmware ») dans tout ou partie des équipements distribués d'un réseau.

On entend de façon générale par « mise à jour de logiciel » le fait de mettre à jour une version de logiciel métier auprès d'un équipement, ou encore simplement d'installer un logiciel dans un nouvel équipement, ou encore de mettre à jour un ou plusieurs fichiers qu'utilise un tel logiciel. Il peut s'agir de mise à jour de fonctions d'automatisation de ces équipements, ou encore d'autres fonctions, telles que des fonctions de télécommunications ou de cyber-sécurité.

La mise à jour des firmware et autres fichiers dans un réseau de contrôle-commande d'équipements d'un réseau électrique se déroule sous le contrôle d'un noeud central racine qui peut être par exemple dans le contexte smartgrids un noeud nommé « Smartgrid Device Management System » (portant la référence SDMS dans les dessins annexés). Ce noeud gère entre autres les actions de mise à jour du réseau de la couche « opération » du modèle standard « smartgrid » défini par l'organisme de normalisation IEC (pour « International Electrotechnical Commission »). Ainsi, il est fait transiter sur l'ensemble des branches du réseau une quantité importante de données. Cette quantité de données est d'autant plus importante que l'équipement dont le logiciel à mettre à jour est proche du noeud racine. Par conséquent, certains noeuds du réseau proches du noeud racine et/ou le noeud racine luimême peuvent être saturés par des demandes de mises à jour de logiciels d'équipements en aval dans le réseau.

Par ailleurs, aujourd'hui, de nombreux équipements sont mis à jour manuellement selon un processus complexe d'ordonnancement.

Les documents d'art antérieur US2014/028468 et US2013/104117 divulguent une mise-à-jour automatique de noeuds d'un réseau de distribution électrique.

La présente invention vient améliorer cette situation.

Elle propose à cet effet un procédé mis en oeuvre par des moyens informatiques de mise jour de logiciels destinés à être exécutés par des équipements d'un réseau de distribution électrique. Chaque équipement forme un noeud d'un réseau de contrôle-commande communiquant avec d'autres noeuds de ce réseau de contrôle-commande. Les noeuds du réseau de contrôle-commande ont des identifiants respectifs.

Le procédé comporte en particulier les étapes mises en oeuvre par un noeud courant :
- obtenir des premières données de l'identifiant d'au moins un noeud secondaire pour lequel le noeud courant est configuré pour autoriser une mise à jour de logiciel, et
- sur réception d'une requête de mise à jour de logiciel pour un noeud secondaire, utiliser lesdites premières données pour une mise à jour de logiciel au moins pour le noeud secondaire identifié dans lesdites premières données.

Ainsi, la présente invention propose une hiérarchie prédéfinie (initialement en fonction de la topologie du réseau ou dynamiquement en fonction de nouvelles installations de matériel) dans les mises à jour des logiciels à effectuer pour chaque équipement du réseau de distribution électrique.

Une telle réalisation permet avantageusement de distribuer le rôle des différents noeuds du réseau pour propager ces mises à jour. Ainsi, il est possible de définir également des noeuds référents du réseau, susceptibles de diffuser ces mises à jour vers des noeuds secondaires.

On comprendra alors que dans une telle réalisation les étapes suivantes peuvent être mises en oeuvre par un noeud courant qui se définit cette fois en tant que noeud secondaire de tels noeuds référents :
- obtenir des deuxièmes données comprenant au moins un identifiant de noeud référent du noeud courant, et,
pour une mise à jour de logiciel du noeud courant:
- lire lesdites deuxièmes données pour identifier au moins un noeud référent, et
- élaborer une requête de mise à jour du logiciel du noeud courant, ladite requête étant destinée au noeud référent identifié et comportant l'identifiant du noeud courant.

Ainsi, selon le principe exposé ci-avant, un noeud référent peut autoriser la mise à jour pour un ou plusieurs noeuds secondaires. Dans un mode de réalisation particulier, inverse et qui fait l'objet de l'invention, un noeud secondaire peut avoir un ou plusieurs noeuds référents déclarés dans les deuxièmes données précitées, et ce en vue de résoudre le même problème présenté en introduction ci-avant.

Ce mode de réalisation, inverse, est avantageux en tant que tel.

Avantageusement, il est possible d'utiliser des identifiants présents dans les requêtes de mise à jour pour autoriser ou non un transfert des données de mise à jour pour un noeud secondaire, et le procédé peut comporter à cet effet les étapes suivantes, mises en oeuvre par un noeud courant :
* sur réception d'une requête de mise à jour de logiciel pour un noeud donné, ladite requête comportant l'identifiant du noeud donné,
   - déterminer si l'identifiant du noeud donné est compris parmi lesdites premières données, et
   - le cas échéant, autoriser une mise à jour de logiciel pour le noeud donné, ou refuser sinon ladite mise à jour.

Selon l'invention, chaque noeud stocke à la fois les premières et secondes données. Une telle réalisation permet de faire en sorte que chaque noeud du réseau soit autonome tant pour la transmission des données de mise à jour vers des noeuds secondaires, que pour la réception de ces données de mise à jour auprès d'un noeud référent.

Dans une réalisation, les premières données comportent une liste d'identifiants de noeuds secondaires. Ainsi, chaque noeud peut diffuser les mises à jour vers plusieurs noeuds secondaires.

Réversiblement, d'après l'invention, les deuxièmes données comportent une liste d'identifiants de noeuds référents. Dans une telle réalisation, chaque noeud secondaire peut avoir plusieurs noeuds référents, afin de se reporter à un autre noeud référent en cas d'échec de réception des données d'un premier noeud référent.

Dans une réalisation, au moins l'une des listes d'identifiants de noeuds secondaires et/ou référents est déclarée dans la norme IEC 61850 comme une instanciation multiple d'objets de type « Data Objects ». Une telle réalisation permet d'homogénéiser la répartition des informations de noeuds référents et de noeuds secondaires auprès de toutes les entités du réseau, et ce de façon normalisée. En outre, la norme précitée IEC 61850 permet de définir en particulier une liste de noeuds, et ce possiblement grâce à l'instanciation multiple précitée de Data Objects.

Plus particulièrement, cette instanciation multiple peut être dans la classe de noeud logique « Logical Node LIFH », relative à la gestion du logiciel auprès d'un noeud courant, selon cette norme IEC 61850.

D'après l'invention, la liste d'identifiants de noeuds référents est ordonnée et, pour une mise à jour de logiciel d'un noeud courant, ce noeud courant :
- lit lesdites deuxièmes données pour identifier au moins un premier noeud référent de la liste ordonnée,
- élabore une première requête de mise à jour, destinée au premier noeud référent identifié, et
- après une temporisation, en cas de non réception de mise à jour, élabore une autre requête destinée au noeud référent suivant identifié dans la liste ordonnée, jusqu'à recevoir ladite mise à jour.

Une telle réalisation permet de définir plus finement la hiérarchie des noeuds dans le réseau, et notamment des noeuds référents de chaque noeud.

Dans une réalisation, le procédé peut comporter en outre une étape préalable dans laquelle une entité de gestion des noeuds du réseau de contrôle-commande détermine, pour chaque noeud, un ou plusieurs noeuds référents et/ou un ou plusieurs noeuds secondaires, selon une topologie prédéterminée du réseau de contrôle-commande.

Avantageusement, une telle réalisation peut être mise en oeuvre par une entité de gestion du réseau, éventuellement par coopération en communiquant avec un noeud racine du réseau.

La présente invention vise aussi un système comportant au moins :
- un premier équipement comportant un circuit informatique programmé pour exécuter les étapes du procédé ci-avant, en tant que noeud référent, et
- un deuxième équipement comportant un circuit informatique programmé pour exécuter les étapes du procédé en tant que noeud secondaire.

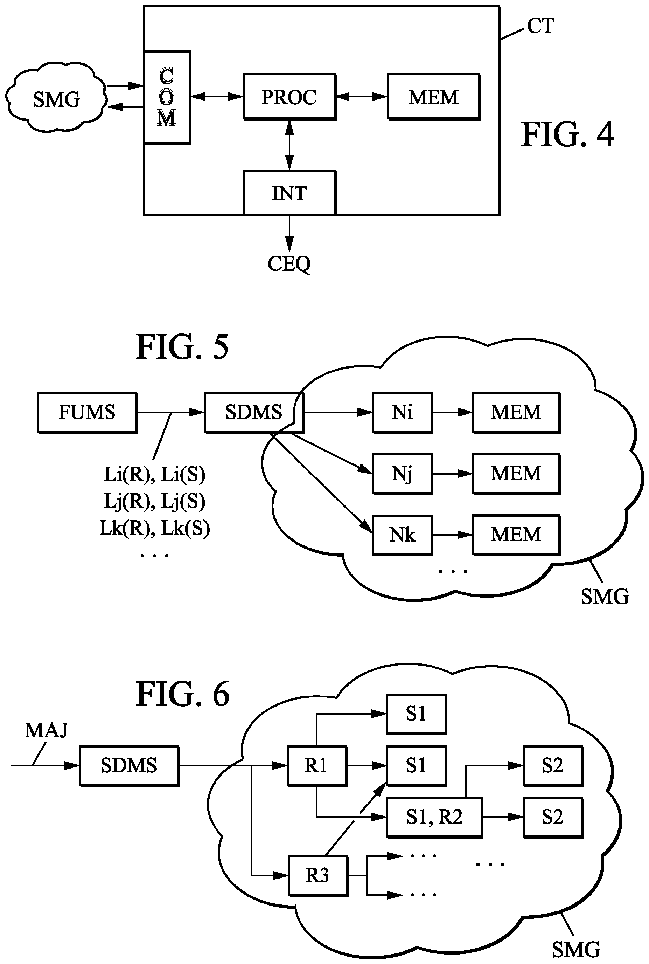

On a illustré à titre d'exemple un tel circuit informatique de l'un ou l'autre de ces premier et deuxième équipements sur la figure 4. Ainsi, dans l'exemple illustré sur la figure 4, le circuit informatique CT comporte une interface de communication COM avec le réseau de contrôle-commande SMG, relié à un processeur PROC capable d'exécuter des opérations correspondant aux étapes du procédé ci-avant. À cet effet, le processeur PROC coopère avec une mémoire MEM stockant notamment des instructions d'un programme informatique au sens de l'invention, ainsi que des données telles que celles des listes de noeuds secondaires et/ou référents. Le processeur PROC est relié en outre à une interface INT pour piloter une mise à jour du logiciel (le logiciel métier notamment) qu'exécute un module de commande de l'équipement CEQ, pour opérer le fonctionnement de l'équipement.

Le système peut comporter en outre une entité de gestion des noeuds du réseau de contrôle-commande, cette entité comportant un circuit informatique programmé pour exécuter notamment l'étape préalable de détermination des première et deuxième données en fonction de la topologie du réseau.

La présente invention vise aussi un programme informatique comportant des instructions (éventuellement réparties entre les différents équipements et entité précités) pour la mise en oeuvre du procédé, lorsque ce programme est exécuté par un processeur.

La présente invention vise aussi un équipement d'un réseau de distribution électrique, comportant un circuit informatique programmé pour exécuter les étapes du procédé en tant que noeud référent.

Elle vise aussi un équipement d'un réseau de distribution électrique, comportant un circuit informatique programmé pour exécuter les étapes du procédé en tant que noeud secondaire.

D'autres avantages et caractéristiques de l'invention apparaîtront à la lecture de la description détaillée de modes de réalisation présentés ci-après à titre d'exemples non limitatifs, et à l'examen des dessins annexés sur lesquels :
- la figure 1 illustre schématiquement un système pour la mise en oeuvre de l'invention,
- la figure 2 illustre schématiquement les étapes d'un procédé au sens de l'invention, selon un exemple de réalisation,
- la figure 3 est un exemple de diagramme de séquence pour une mise à jour de logiciel selon le procédé de la figure 2,
- la figure 4 représente très schématiquement un exemple de structure type d'un équipement pour la mise en oeuvre de l'invention (en tant que noeud référent, ou en tant que noeud secondaire, ou encore en tant qu'entité de gestion des opérations de maintenance des équipements du réseau et notamment des mises à jour de ces équipements),
- la figure 5 illustre schématiquement le système de la figure 1 dans une première étape, initiale, du procédé,
- la figure 6 illustre schématiquement le système de la figure 1 dans une deuxième étape, courante, du procédé.

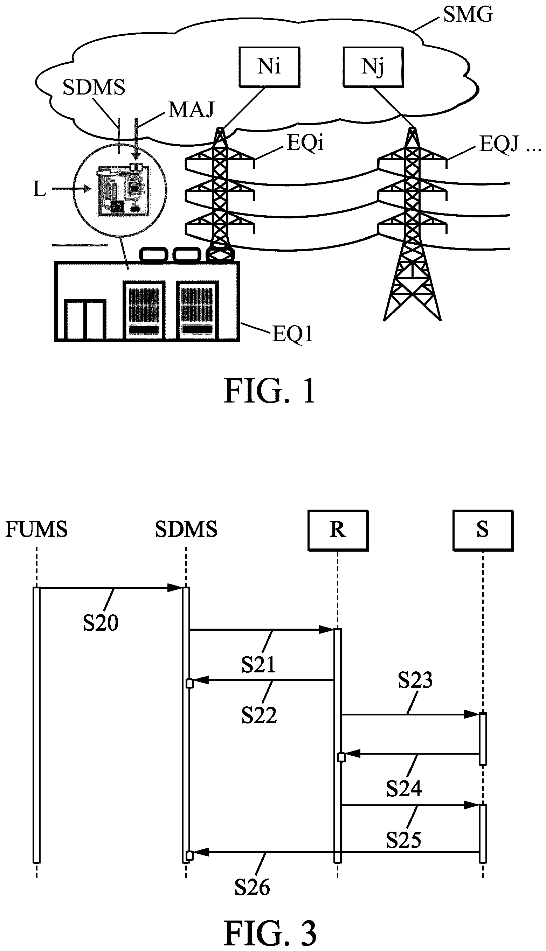

On a représenté sur la figure 1 un ensemble d'équipements EQ1, EQi, EQj d'un réseau de distribution d'électricité, tels que par exemple un poste transformateur HTA/BT, un ou plusieurs poteaux avec éventuellement des routeurs, jusqu'à des noeuds feuilles du réseau (non représentés). Ces équipements sont dits « intelligents » et en particulier comportent des moyens de communication entre équipements, au sein d'un réseau de télécommunication de type « smartgrid » SMG. Ainsi, chacun de ces équipements EQ1, EQi, EQj peut former un noeud SDMS, Ni, Nj, etc. du réseau SMG.

Par exemple, la référence SDMS de la figure 1 peut désigner un noeud central racine nommé « Smartgrid Device Management System », qui peut alors recevoir les listes précitées de noeuds secondaires et de noeuds référents, et ce pour chaque noeud Ni, Nj, etc., en aval du réseau. En référence maintenant à la figure 5 illustrant cette situation, ces listes Li(R), Li(S) ; Lj(R), Lj(S) ; etc. de noeuds référents et de noeuds secondaires sont initialement et/ou dynamiquement établies, par exemple en fonction d'une topologie du réseau. L'entité en charge de définir ces listes peut être à titre d'exemple non limitatif une entité de gestion du réseau FUMS (pour « Firmware Update Management System ») notamment en charge des mises à jour de logiciels (notamment les logiciels métiers ou « firmware ») qu'exploitent les équipements. Cette entité FUMS peut coopérer avec le noeud SDMS à cette fin.

Le noeud SDMS transmet alors à chaque noeud Ni un couple de listes de noeuds référents Li(R) et de noeuds secondaires Li(S), que chaque noeud peut stocker alors en mémoire MEM. Il convient de noter qu'un noeud feuille complètement en aval du réseau SMG peut n'avoir que des noeuds référents et sa liste de noeuds secondaires peut se réduire à un ensemble vide ou ce noeud peut simplement ne pas avoir de liste de noeuds secondaires.

En référence maintenant à la figure 6, le noeud SDMS, sur réception d'une requête de mise à jour des logiciels des équipements, transmet à ses noeuds secondaires (R1, R3 dans l'exemple de la figure 6) une autorisation de mettre à jour leur logiciel (via le noeud SDMS par exemple). Ensuite, par exemple le noeud R1 est référent pour des noeuds secondaires S1 en aval et leur transmet une autorisation de mise à jour à leur tour. De même, un noeud S1 peut être un noeud référent R2 pour des noeuds secondaires S2 subséquents, et ainsi de suite. Il convient de relever, comme illustré sur la figure 6, qu'un noeud secondaire (S1) peut avoir plusieurs noeuds référents R1, R3. Une telle réalisation peut être avantageuse pour télécharger simultanément différentes parties des mises à jour à effectuer, ces différentes parties étant issues de différents noeuds référents R1, R3 afin de soulager la charge de chaque noeud référent.

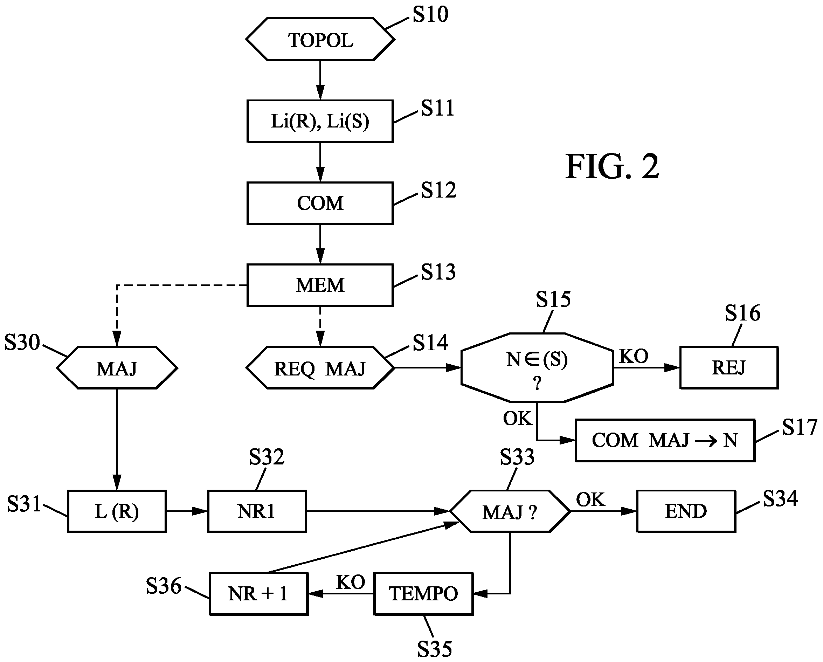

Par ailleurs, il est prévu une liste ordonnée de noeuds référents pour attendre d'un premier noeud les données de mise à jour, puis après une temporisation attendre ces données d'un second noeud dans la liste ces données, si elles n'ont pas été fournies par le premier noeud de la liste, et ainsi de suite. Cette réalisation est illustrée sur la figure 2, laquelle est maintenant commentée ci-après.

Une fois la topologie du réseau définie lors d'une première étape S 10, il peut être défini à l'étape S11 les listes de noeuds référents Li(R) et de noeuds secondaires Li(S). Ces listes sont communiquées à l'étape S 12 aux différents noeuds du réseau smartgrid pour être stockées à l'étape S13 par chacun des noeuds, dans un exemple de réalisation. Il convient de noter qu'en variante ces listes de noeuds peuvent être stockées par exemple par le noeud racine SMDS ou par l'entité de gestion des mises à jour FUMS.

Ensuite, lors d'une étape courante S14, un noeud courant du réseau reçoit une requête de mise à jour (cette requête comportant typiquement un identifiant d'un noeud N du réseau). Cette requête peut être issue du noeud racine SDMS, par exemple, pour une mise à jour ciblée d'un noeud précis N du réseau, et comporte alors l'identifiant de ce noeud N à cet effet. En variante, cette requête peut être émise directement par ce noeud N, suite à l'installation d'un nouveau matériel connecté à ce noeud N par exemple.

La liste des noeuds secondaires L(S) du noeud courant comporte typiquement la liste des identifiants de ces noeuds secondaires, ce qui permet au noeud courant de comparer à l'étape S15 l'identifiant présent dans la requête à la liste des identifiants de noeuds secondaires. À l'issue de cette comparaison, si le noeud courant ne retrouve pas l'identifiant du noeud N dans la liste, le noeud courant rejette la requête à l'étape S16. Sinon, il transmet à l'étape S 17 les données de mise à jour nécessaires du logiciel du noeud N.

En complément ou en variante (typiquement dans le cas d'un noeud feuille en aval du réseau), un noeud courant peut, à l'étape S30, recevoir un ordre de mise à jour issu par exemple de l'entité FUMS (via le noeud racine SDMS par exemple). À l'étape S31, ce noeud courant consulte la liste L(R) de ses noeuds référents et plus particulièrement leurs identifiants respectifs pour leur adresser des requêtes des données de mise à jour. Ainsi, à l'étape S32, l'identifiant du premier noeud référent NR1 de la liste L(R) est utilisé pour établir la première requête des données de mise à jour. Si ces données ne sont pas reçues à l'étape S33 après une temporisation S35, alors la liste est consultée à nouveau pour adresser la requête au noeud suivant de la liste à l'étape S36. Si les données ne sont toujours pas reçues après épuisement des identifiants de la liste, le noeud courant peut adresser à nouveau une requête au premier noeud NR1 et réitérer les étapes S32, S33, S35 et S36, jusqu'à recevoir les données de mise à jour à l'étape S34.

Ainsi, il est proposé dans cette réalisation de définir dans le réseau un sous-ensemble de noeuds « référents » dans lesquels sont stockés ou téléchargés dans un premier temps un logiciel (ou firmware) « à jour ». Ces noeuds référents (Noeuds R) gèrent dans un deuxième temps la diffusion des mises à jour vers les noeuds secondaires (Noeuds S) par l'intermédiaire de protocoles qui peuvent respecter la norme IEC-61850, comme exposé ci-après.

Il est donc proposé une évolution du modèle de données de chaque équipement comprenant deux nouveaux paramètres définis par des variables de type « data object » selon la norme IEC-61850 :
- Une liste de noeuds référents aptes à mettre à jour un noeud courant nécessitant une mise à jour de logiciel, et
- Une liste de noeuds secondaires pour lesquels un équipement courant peut être un noeud référent configurés pour autoriser la mise à jour pour ces noeuds secondaires.

Chaque équipement stocke en mémoire (ou peut accéder à une mémoire distante stockant) une liste entretenue de noeuds référents et de noeuds secondaires. Un noeud secondaire peutêtre mis à jour par plusieurs noeuds référents afin d'apporter une résilience au système. On peut ainsi définir implicitement (selon l'ordre des noeuds référents dans la liste) ou explicitement par d'autres attributs de noeuds une priorité de noeuds référents pour la mise à jour de noeuds secondaires. Ces noeuds prioritaires peuvent par exemple bénéficier avantageusement d'un niveau de cyber-sécurité (anti-intrusion) plus élevé que les autres noeuds de la liste.

Plus précisément, la norme IEC 61850-90-16 (Partie 90-16 - « Using IEC 61850 for System Management purposes ») peut évoluer pour proposer deux nouvelles variables décrivant les paramètres définissant respectivement les noeuds référents et les noeuds secondaires.

Le nombre maximum de noeuds secondaires ou référents peut être configuré dans le modèle de données de l'équipement de manière statique ou dynamique.

Comme le précise la norme IEC 61850-7-2 (Edition 2.1 - « Conditions for presence éléments »), les objets dits « Data Objects » d'une classe de noeud logique se voient attribuer une conditionnalité (colonne M/O/C comme présenté dans la table ci-après). Celle-ci permet également de définir la possibilité d'avoir une multiplicité d'instances de ces « data objects » (Mmulti, Omulti). Les sigles M/O/C désignent respectivement Mandatory (obligatoire), Optionnal (optionnel) et Conditionnal (conditionnel). Ici, il est choisi à titre d'exemple une conditionnalité de type « optionnelle » et « multiple » (Omulti), mais d'autres réalisations sont possibles. Concrètement cette conditionnalité donne la possibilité d'instancier un nombre supérieur ou égale à zéro de ces « data objects ».

Plus particulièrement, dans la classe de noeud logique relative à la gestion du logiciel métier auprès d'un équipement donné (équipement intelligent dans le contexte d'un réseau smartgrid et appelé IED pour « Intelligent Electronic Device »), cette classe étant désignée « Logical Node LIFH » selon IEC 61850-90-16 (avec IFH pour « IED Firmware Handling »), on peut définir :
- Une nouvelle variable DataObject nommée "**FWUpdRef**" (pour « Firmware Update Référence Nodes ») de conditionnalité « optionnelle » "**OMulti**" (définie par un réglage « Integer Status Setting ») qui donne les identifiants des noeuds référents pour les mises à jour du logiciel de l'équipement donné IED, précité ; et
- Une nouvelle variable DataObject nommée "**FWUpdSec**" (pour « Firmware Update Secondary Nodes ») de conditionnalité « optionnelle » "**OMulti**" (définie par un réglage « Integer Status Setting ») et qui donne les identifiants des noeuds secondaires pour leurs mises à jour en transférant les données de mise à jour via l'équipement donné IED, précité.

La table de déclaration de ces variables peut alors être comme suit :

| Data object name | Common data class | Explanation | T | M/O/C |
|---|---|---|---|---|
| **FWUpdRef** | VSG | Referent Nodes list for IED | | OMulti |
| **FWUpdSec** | VSG | Secondary Nodes list for IED | | OMulti |

La liste d'objets peut alors être définie en se basant sur le type (Common Data Class) « Visible String Setting » défini dans IEC 61850-7-3 dont l'abréviation est « VSG ».

Chaque noeud référent peut ainsi autoriser et procéder à la mise à jour du logiciel d'un noeud secondaire si ce noeud secondaire est dans sa liste.

Chaque noeud secondaire peut, pour la mise à jour de son logiciel, s'adresser à un noeud référent autorisé s'il est dans sa liste de noeuds référents.

La figure 3 illustre une réalisation possible d'une séquence de mise à jour des logiciels de type firmware.

A l'étape S20, une entité de gestion des mises à jour de firmware des équipements du réseau FUMS (pour Firmware Update Management System) commence par notifier qu'une nouvelle version est disponible pour un certains équipements du réseau par exemple (ou certains modèles d'équipement IED typiquement). Une entité de gestion des équipements de contrôle-commande « smartgrid », référencée SDMS, déclenche à l'étape S21, consécutive à l'étape S20, le processus de déploiement de la mise à jour vers un (ou plusieurs) équipement(s) destinataire(s) référent(s) R. Après récupération de la nouvelle version (et accusé de réception de cette nouvelle version à l'étape S22), chaque noeud référent R notifie à son tour (étape S23) ses noeuds définis comme secondaires S de la disponibilité de cette mise à jour. Ces noeuds secondaires S sont alors en mesure de demander (étape S24) et de récupérer (S25) auprès du noeud référent R cette nouvelle version logicielle afin de mettre à jour le firmware. Ensuite, chaque équipement ayant effectué cette mise à jour peut notifier à l'étape S26 la fin de cette mise à jour à l'entité SDMS pour y enregistrer ce changement.

Il convient de noter qu'une variante peut consister à prévoir que les noeuds secondaires interrogent à un intervalle de temps défini leur(s) noeud(s) référent(s) pour vérifier si une nouvelle mise à jour est disponible.

De manière générale, la présente invention ne se limite pas aux formes de réalisation décrites ci-avant à titre d'exemple ; elle s'étend à d'autres variantes.

Par exemple, on a présenté ci-avant la situation dans laquelle un noeud courant peut disposer à la fois d'une liste de noeuds secondaires et d'une liste de noeuds référents. Toutefois, dans une réalisation moins sophistiquée, il peut n'être prévu qu'une liste de noeud secondaires, chaque noeud courant propageant ainsi les données de mise à jour aux noeuds secondaires qui lui sont en aval.

## Revendications

1. Procédé mis en oeuvre par des moyens informatiques de mise jour de logiciels destinés à être exécutés par des équipements d'un réseau de distribution électrique, chaque équipement formant un noeud d'un réseau de contrôle-commande communiquant avec d'autres noeuds du réseau de contrôle-commande, les noeuds du réseau de contrôle-commande ayant des identifiants respectifs, les noeuds du réseau de contrôle-commande comportant une pluralité de noeuds référents pour des noeuds secondaires respectifs, un noeud référant étant configuré pour obtenir des premières données d'identifiant d'au moins un noeud secondaire et autoriser une mise à jour de logiciel pour ledit au moins un noeud secondaire,
le procédé comportant les étapes mises en oeuvre par un noeud courant :
- obtenir des deuxièmes données comprenant au moins un identifiant de noeud référent du noeud courant, et, le procédé étant **caractérisé par** les étapes suivantes :
pour une mise à jour de logiciel du noeud courant:
- lire lesdites deuxièmes données pour identifier au moins un noeud référent, et
- élaborer une requête de mise à jour du logiciel du noeud courant, ladite requête étant destinée au noeud référent identifié et comportant l'identifiant du noeud courant,
procédé en outre dans lequel les deuxièmes données comportent une liste d'identifiants de noeuds référents, et dans lequel la liste d'identifiants de noeuds référents est ordonnée et, pour une mise à jour de logiciel d'un noeud courant, ce noeud courant :
- lit lesdites deuxièmes données pour identifier au moins un premier noeud référent de la liste ordonnée,
- élabore une première requête de mise à jour, destinée au premier noeud référent identifié, et
- après une temporisation, en cas de non réception de mise à jour, élabore une autre requête destinée au noeud référent suivant identifié dans la liste ordonnée, jusqu'à recevoir ladite mise à jour.

2. Procédé selon la revendication 1, dans lequel chaque noeud stocke les premières et secondes données.

3. Procédé selon l'une des revendications précédentes, dans lequel au moins l'une des listes d'identifiants de noeuds secondaires et/ou référents est déclarée dans la norme IEC 61850 comme une instanciation multiple d'objets de type « Data Objects ».

4. Procédé selon la revendication 3, dans lequel ladite instanciation multiple est dans la classe de noeud logique « Logical Node LIFH », relative à la gestion du logiciel auprès d'un noeud courant, selon la norme IEC 61850.

5. Procédé selon l'une des revendications précédentes, comportant en outre une étape préalable dans laquelle une entité de gestion des noeuds du réseau de contrôle-commande détermine, pour chaque noeud, un ou plusieurs noeuds référents et/ou un ou plusieurs noeuds secondaires, selon une topologie prédéterminée du réseau de contrôle-commande.

6. Système comportant au moins :
- un premier équipement en tant que noeud référent, et
- un deuxième équipement comportant un circuit informatique programmé pour exécuter les étapes du procédé selon l'une des revendications précédentes en tant que noeud secondaire.

7. Système selon la revendication 6, comportant en outre une entité de gestion des noeuds du réseau de contrôle-commande, ladite entité comportant un circuit informatique programmé pour exécuter les étapes du procédé selon la revendication 5.

8. Programme informatique comportant des instructions pour la mise en oeuvre du procédé selon l'une des revendications 1 à 5, lorsque ce programme est exécuté par un processeur.

9. Equipement d'un réseau de distribution électrique, comportant un circuit informatique programmé pour exécuter les étapes du procédé selon l'une des revendications 1 à 5, en tant que noeud secondaire.

## Patentansprüche

1. Computerimplementiertes Verfahren zum Update von Software, die dazu bestimmt ist, von Einrichtungen eines Stromverteilungsnetzwerks ausgeführt zu werden, wobei jede Einrichtung einen Knoten eines Steuerungsnetzwerks bildet, der mit anderen Knoten des Steuerungsnetzwerks kommuniziert, wobei die Knoten des Steuerungsnetzwerks jeweilige Kennungen aufweisen, wobei die Knoten des Steuerungsnetzwerks mehrere Referenzknoten für jeweilige sekundäre Knoten umfassen, wobei ein Referenzknoten dazu konfiguriert ist, erste Daten der Kennung mindestens eines sekundären Knoten zu erhalten und ein Software-Update für den mindestens einen sekundären Knoten zu autorisieren,
wobei das Verfahren die Schritte umfasst, die durch einen aktuellen Knoten implementiert werden:
- Erhalten zweiter Daten, welche mindestens eine Kennung eines Referenzknotens des aktuellen Knotens umfassen,
und **gekennzeichnet durch** die folgenden Schritte für ein Software-Update des aktuellen Knotens:
- Lesen der zweiten Daten, um mindestens einen Referenzknoten zu identifizieren, und
- Erstellen einer Update-Anfrage für die Software des aktuellen Knotens, wobei die Anfrage für den identifizierten Referenzknoten bestimmt ist und die Kennung des aktuellen Knotens umfasst,
wobei bei dem Verfahren weiterhin die zweiten Daten eine Liste von Kennungen von Referenzknoten umfassen, und wobei die Liste von Kennungen von Referenzknoten geordnet ist, und wobei für ein Software-Update eines aktuellen Knotens dieser aktuelle Knoten:
- die zweiten Daten liest, um mindestens einen ersten Referenzknoten der geordneten Liste zu identifizieren,
- eine erste Update-Anfrage erstellt, die für den ersten identifizierten Referenzknoten bestimmt ist, und
- nach einer Zeitüberschreitung im Falle des Nichtempfangs eines Updates eine weitere Anfrage für den nächsten in der geordneten Liste identifizierten Referenzknoten erstellt, bis das Update empfangen wird.

2. Verfahren nach Anspruch 1, wobei jeder Knoten die ersten und zweiten Daten speichert.

3. Verfahren nach einem der vorhergehenden Ansprüche, wobei mindestens eine der Listen von Kennungen von sekundären Knoten und/oder Referenzknoten in der Norm IEC 61850 als mehrfache Instanziierung von Objekten vom Typ "Data Objects" deklariert ist.

4. Verfahren nach Anspruch 3, bei dem die mehrfache Instanziierung in der logischen Knotenklasse "Logical Node LIFH" erfolgt, die sich auf die Verwaltung der Software mit einem aktuellen Knoten gemäß der Norm IEC 61850 bezieht.

5. Verfahren nach einem der vorhergehenden Ansprüche, das außerdem einen vorherigen Schritt umfasst, in dem eine Einheit zur Verwaltung der Knoten des Steuerungsnetzwerks für jeden Knoten einen oder mehrere Referenzknoten und/oder einen oder mehrere sekundäre Knoten bestimmt, gemäß einer vorgegebenen Topologie des Steuerungsnetzwerks.

6. System, umfassend mindestens:
- eine erste Einrichtung als Referenzknoten, und
- eine zweite Einrichtung, die eine Computerschaltung umfasst, die so programmiert ist, dass sie die Schritte des Verfahrens nach einem der vorhergehenden Ansprüche als sekundärer Knoten ausführt.

7. System nach Anspruch 6, weiterhin umfassend eine Einheit zum Verwalten der Knoten des Steuerungsnetzwerks, wobei die Einheit eine Computerschaltung umfasst, die so programmiert ist, dass sie die Schritte des Verfahrens nach Anspruch 5 ausführt.

8. Computerprogramm mit Anweisungen zur Durchführung des Verfahrens nach einem der Ansprüche 1 bis 5, wenn dieses Programm von einem Prozessor ausgeführt wird.

9. Einrichtung eines Stromverteilungsnetzwerks, umfassend eine Computerschaltung, die so programmiert ist, dass sie die Schritte des Verfahrens nach einem der Ansprüche 1 bis 5 als sekundärer Knoten ausführt.

## Claims

1. A method implemented by computer means for updating software intended to be executed by equipment of an electrical distribution network, each equipment forming a node of a control network communicating with other nodes of the control network, the nodes of the control network having respective identifiers, the nodes of the control network comprising a plurality of referent nodes for respective secondary nodes, a referent node being configured to obtain first identifier data from at least one secondary node and allow a software update for said at least one secondary node,
The method comprising the steps implemented by a current node:
- obtain second data comprising at least one identifier of the referent node of the current node, and, the method being **characterized by** the following steps:
For a software update of the current node:
- read said second data to identify at least one referent node, and
- elaborate a request to update the software of the current node, said request being addressed to the identified referent node and including the identifier of the current node,
The method wherein the second data includes a list of identifiers of referent nodes, and wherein the list of identifiers of referent nodes is ordered and, for a software update of a current node, this current node:
- reads the second data to identify at least one first referent node of the ordered list,
- prepares a first update request, intended for the first referent node identified, and
- after a timeout, in case of non-receipt of update, elaborates another request intended for the next referent node identified in the ordered list, until receiving the update.

2. The method of claim 1, wherein each node stores the first and second data.

3. The method according to one of the preceding claims, wherein at least one of the lists of identifiers of secondary nodes and / or referent nodes is declared in standard IEC 61850 as a multiple instantiation of objects of type "Data Objects".

4. The method of claim 3, wherein said multiple instantiation is in the logical node class "Logical Node LIFH", relating to the management of the software at a common node, according to standard IEC 61850.

5. The method according to one of the preceding claims, further comprising a preliminary step wherein a management entity of the nodes of the control-command network determines, for each node, one or more referent nodes and / or one or more secondary nodes, according to a predetermined topology of the control network.

6. A system comprising at least:
- a first equipment as a referent node, and
- a second equipment comprising a computer circuit programmed to perform the steps of the method according to one of the preceding claims as a secondary node.

7. The system of claim 6, further comprising a management entity of the nodes of the control network, said entity comprising a computer circuit programmed to perform the steps of the method according to claim 5.

8. A computer program comprising instructions for implementing the method according to one of claims 1 to 5, when this program is executed by a processor.

9. An equipment of an electrical distribution network, comprising a computer circuit programmed to execute the process steps according to anyone of claims 1 to 5, as a secondary node.
